# EUROPEAN PATENT APPLICATION

(11) **EP 1 130 593 A2**
(43) Date of publication of application: **05.09.2001**
(21) Application number: 01301876.7
(22) Date of filing: 01.03.2001
(51) Int. Cl.: G11B 23/03, G11B 17/04

(54) **Disk cartridge mis-insertion discrimination**

(30) Priority: 02.03.2000 JP 2000057384
(71) Applicant: SONY CORPORATION, Tokyo (JP)
(72) Inventor: Sanada, Yotaro, Shinagawa-ku, Tokyo (JP); Kusui, Yoshio, Shinagawa-ku, Tokyo (JP); Netsu, Naohiro, Shinagawa-ku, Tokyo (JP)
(74) Representative: Ayers, Martyn Lewis Stanley

(57) **Abstract**

There are obtained a disk cartridge apparatus and a disk cartridge in which a disk cartridge having a different format is made unable to be inserted into a drive apparatus from a mechanism standpoint so that a user can instantly recognize that the disk cartridge having the different format has been inserted into the drive apparatus by mistake. A disk cartridge apparatus and a disk cartridge include a first disk cartridge and a second disk cartridge having cartridge housings of the same shape to store therein disks of the system that can be recorded and read by light of red laser beams and light of blue laser beams. When the first disk cartridge is inserted into a first drive apparatus 19, a discriminating groove of the first disk cartridge becomes identical to a discriminating convex portion 20 of the first drive apparatus 19 to enable the first disk cartridge to be loaded on the first drive apparatus. When a disk cartridge 21 of a different kind is inserted into the first drive apparatus 19, the discriminating convex portion 20 and a discriminating groove 24 of the disk cartridge 21 of different kind become nonidentical to each other to inhibit the disk cartridge of the different kind from being loaded on the first drive apparatus.

## Description

The present invention relates to a disk cartridge capable of recording an information signal on a signal recording layer or reproducing an information signal from the signal recording layer by irradiating light of laser beams on the signal recording layer of an optical disk, for example. More specifically, the present invention relates to a disk cartridge apparatus and a disk cartridge in which erroneous-insertion of disk cartridges having cartridge housings of the same shape to store therein a disk of a system that can be recorded/read by irradiating light of red laser beams and a disk of a system that can be recorded/read by irradiating light of blue laser beams into drive apparatus of different systems can easily be discriminated from a mechanism standpoint.

As a recording medium for a variety of information such as audio information and video information, there has heretofore been proposed an optical disk in which information is reproduced from the recording medium by using light of laser beams or information is recorded on the recording medium by using light of laser beams. The recording on this kind of optical disk by light of red laser beams (wavelength is ranging from 630 to 680 nm) has been widely used regardless of the existence of the cartridge housing of the recording medium such as CD, MD or DVD.

There has been expected an appearance of an information device capable of recording information on an optical disk by using light of blue laser beams (wavelength is ranging from 390 to 449) whose wavelength is shorter than that of the above light of red laser beams. For example, there are expected a disk of a recording system capable of reading and writing information by using light of red laser beams and a disk of a recording system capable of reading and writing information by using light of blue laser beams although their cartridge housings are the same in shape and in size. It is needless to say that a disk cartridge housing therein a disk for light of red laser beams and a disk cartridge housing therein a disk for light of blue laser beams can be read and written by their own exclusive drive apparatus, respectively.

However, there arises a problem when the disk cartridges have the same cartridge housing but they are different in recording system. For example, when a user inserts a disk cartridge of light of blue laser beams into a drive apparatus corresponding to light of red laser beams by mistake or when a user inserts a disk cartridge of light of red laser beams into a drive apparatus corresponding to light of blue laser beams, although it is no wonder that the drive apparatus side should display that information cannot be read from and written in the disk cartridge inserted by mistake, it takes plenty of time for a user to recognize that the above cause is based on the different format of the disk cartridge.

The present invention is made in order to solve the above problem and intended to obtain a disk cartridge apparatus and a disk cartridge in which erroneous-insertion of a disk cartridge having a different format can be instantly recognized by inhibiting a disk cartridge having a different format from being inserted into a drive apparatus from a mechanism standpoint.

A disk cartridge apparatus according to the present invention comprises disk cartridges of different kinds having cartridge housings of the same shape to store therein disks of different information recording and reading system, respective exclusive recording and reproducing apparatus on which the disk cartridges of different kinds are loaded and mis-insertion discriminating means having concave and convex surface shapes which are made identical to each other to enable the disk cartridges of different kinds to be loaded on the respective exclusive recording and reproducing apparatus when the disk cartridges of different kinds are inserted into the respective exclusive recording and reproducing apparatus, the concave and convex surface shapes being made nonidentical to inhibit the disk cartridges from being loaded on different recording and reproducing apparatus when the disk cartridges are inserted into the different recording and reproducing apparatus.

A disk cartridge according to the present invention comprises disk cartridges of different kinds having cartridge housings of the same shape to store therein disks of different information recording and reading systems and the disks comprises a disk of the system that can be recorded/read by light of red laser beams and a disk of the system that can be recorded/read by light of blue laser beams.

According to the above disk cartridge apparatus and disk cartridge, when the disk cartridge is inserted into the exclusive recording and reproducing apparatus, the concave portion formed on the disk cartridge becomes identical to the convex portion of the recording and reproducing apparatus side and the disk cartridge is loaded onto the predetermined position. As a result, a user can recognize that the disk cartridge is inserted into the exclusive recording and reproducing apparatus. When the disk cartridge is inserted into a different recording and reproducing apparatus, the concave portion of the disk cartridge and the convex portion of the recording and reproducing apparatus side become nonidentical to each other. As a result, the disk cartridge cannot be inserted into the different recording and reproducing apparatus side completely. Therefore, a user can recognize that the disk cartridge is inserted into the different recording and reproducing apparatus by mistake.

Since the disk cartridge includes the cartridge housings of the same shape to store therein a disk of a system that can be recorded/read by light of red laser beams and a disk of a system that can be recorded/read by light of blue laser beams, the disk cartridge can be selectively applied to various information devices as disk cartridges having different information recording amounts.

A disk cartridge apparatus and a disk cartridge according to an embodiment of the present invention will hereinafter be described by way of non-limitative example with reference to the drawings, in which
FIG. 1 is a perspective view showing a first disk cartridge according to the present invention from the side of an upper half;
FIG. 2 is a perspective view showing the same first disk cartridge from the side of a lower half;
FIG. 3 is a plan view of the same first disk cartridge;
FIG. 4 is a perspective view showing a second disk cartridge according to the present invention from the side of an upper half;
FIG. 5 is a perspective view showing the same second disk cartridge from the side of a lower half;
FIG. 6 is a plan view showing the same second disk cartridge;
FIG. 7 is a partly cross-sectional plan view showing the state in which an exclusive first disk cartridge is loaded onto a first drive apparatus;
FIG. 8 is a partly cross-sectional plan view showing the state in which a second disk cartridge of a different type is loaded onto the first drive apparatus;
FIG. 9 is a partly cross-sectional plan view showing the state in which the exclusive second disk cartridge is loaded on a second drive apparatus; and
FIG. 10 is a partly cross-sectional view showing the state in which the first disk cartridge of the different type is loaded on the second drive apparatus.

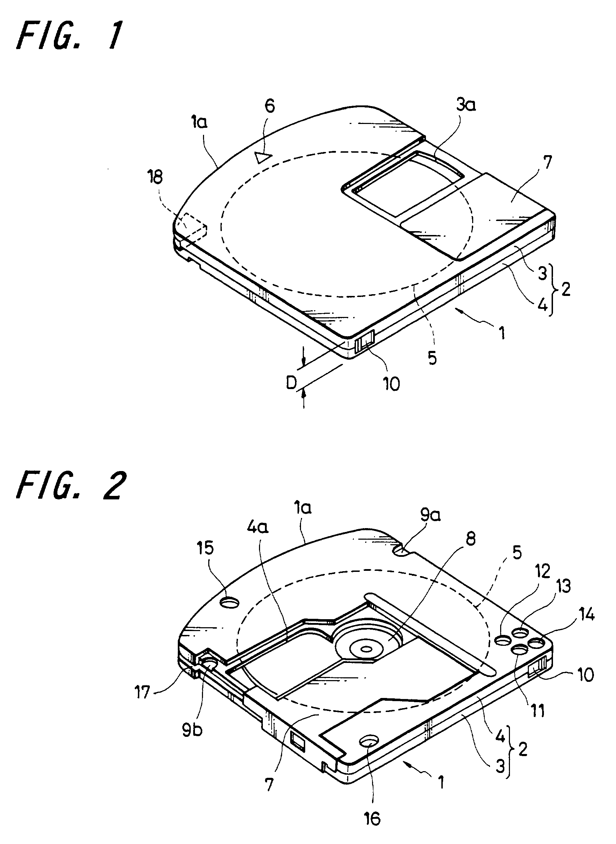

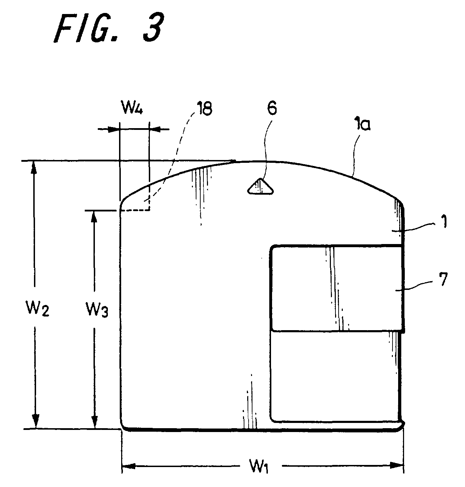

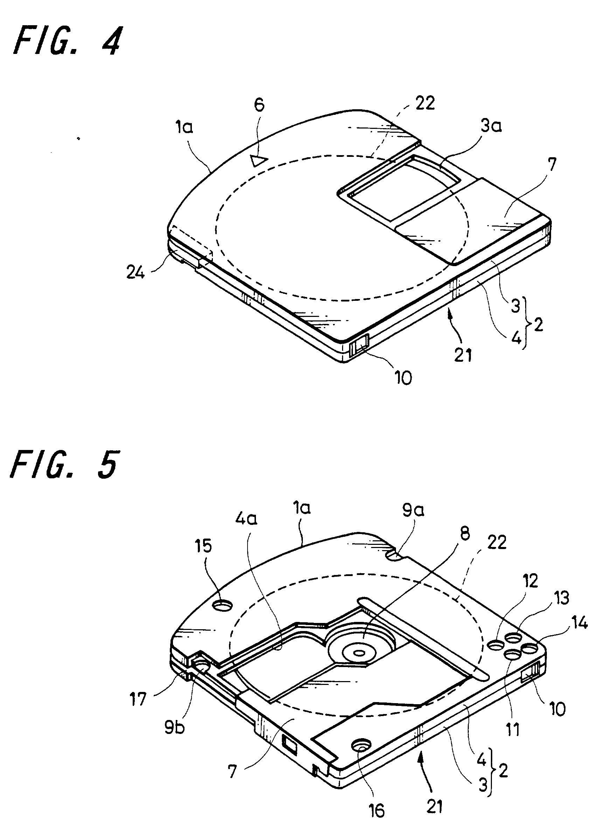

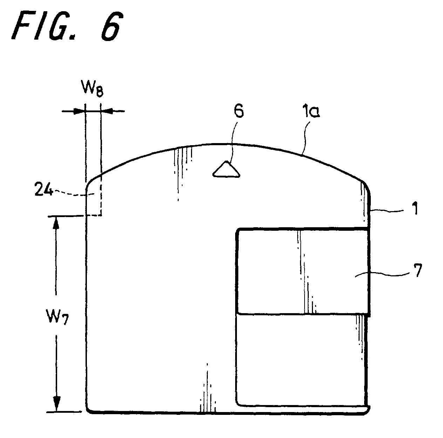

FIG. 1 is a perspective view showing from an upper half side a disk cartridge (hereinafter referred to as "first disk cartridge") storing therein a disk of a system to be recorded/read by light of red laser beams while its shutter is being opened. FIG. 2 is a perspective view showing from a lower half side the same first disk cartridge with its shutter being opened. FIG. 3 is a plan view showing from the upper half side the same first disk cartridge with its shutter being closed. FIG. 4 is a perspective view showing from an upper half side a disk cartridge (hereinafter referred to as "second disk cartridge") storing therein a disk of a system to be recorded/read by light of blue laser beams while its shutter is being opened. FIG. 5 is a perspective view showing from a lower half side the same second disk cartridge with its shutter being opened. FIG. 6 is a plan view showing from the upper half side the same second disk cartridge with its shutter being closed.

Reference numeral 1 generally depicts a first disk cartridge. A cartridge housing 2 is generally comprised of an upper half 3 and a lower half 4 which are fastened at their joint surfaces by highfrequency fusion bonding. A disk 5 stored within the first disk cartridge 1 is an optical disk having a diameter of 50 mm, for example, in which information is recorded/read by light of red laser beams (630 to 680 nm). The disk 5 in this case has a recording capacity of 5 gigabytes. The insertion direction of the disk cartridge 1 is shown by an arrow-like marker 6.

The insertion side of the first disk cartridge 1 is formed as a convex circular arc-like shape la. This circular arc-like shape la can be identified as the insertion side of the first disk cartridge 1 and is suitable for miniaturizing the first disk cartridge 1. The disk housing 2 is standardized in such a manner that a width W₁ of one side perpendicular to the insertion direction is 57.8 mm, a depth length W₂ of the other side perpendicular to this side is 53.8 mm and a thickness D is 4 mm.

The above first disk cartridge 1 has a shutter plate 7 which can be slid to open and close both surfaces of the cartridge housing 2. While this shutter plate 7 is being opened, on the upper surface side of the disk cartridge 1, the disk 5 is partly exposed at its upper surface along the diametrical direction from an opening window 3a of the upper half 3. At the same time, on the lower surface side of the disk cartridge 1, the disk 5 is partly exposed at its lower surface (surface from and in which information can be read and written) along the diametrical direction from an opening window 4a of the lower half 4. A chucking plate 8 of the disk 5 is exposed on the lower surface side of the first disk cartridge 1 while the shutter plate 7 is being opened.

While this shutter plate 7 is being closed, it is locked at the closing position by a lock member, not shown. In order to open the shutter plate 7, the first disk cartridge 1 is inserted into a drive apparatus, whereby the lock member is released by a shutter lock release member thereby to open the shutter plate 7.

On the insertion side of the first disk cartridge 1, the lower half 4 has a loading concave portion 9a formed at its one side end portion. While the shutter plate 7, which is located at the closing position, exists on the other side end portion of the lower half 4, a loading concave portion 9b is formed at the side end portion of the lower half 4 under this shutter plate 7 at its position parallel to the above loading concave portion 9a. This loading concave portion 9b is hidden by the shutter plate 7 when the shutter plate 7 is closed.

The first disk cartridge 1 has at its back provided a mis-erase preventing plug 10 for preventing recorded information from being erased from the disk 5 by mistake. The lower half 4 has a mis-erase prevention detecting hole 11 which is opened and closed as the mis-erase preventing plug 10 is being slid. Reference numeral 12, 13 are discriminating holes which discriminate specification of the disk cartridge 1.

The lower half 3 of the first disk cartridge 1 has a circular location hole 14 defined adjacent to the mis-erase prevention detecting hole 11, an oblong location hole 15 defined at the tip end side of the insertion side along a diagonal line of the location hole 14 and an oblong location hole 16 defined at the rear end side opposite to the insertion side in parallel to the location hole 14.

The first disk cartridge 1 has at its one side surface (shutter plate 7 side) of the insertion side formed a guide groove 17 with which the shutter lock release member is engaged when the disk cartridge 1 is inserted into a drive apparatus which will be described later on. Then, the first disk cartridge 1 has at its corner portion of other side surface of the insertion side formed a discriminating groove 18 serving as a mis-insertion discriminating means for discriminating the first disk cartridge 1 from other disks.

This discriminating groove 18 is formed as a groove-like shape having a predetermined width and a relatively small depth in the case of the first disk cartridge 1. The discriminating groove 18 is standardized in such a manner that a length W₃ ranging from its bottom end portion to the rear end portion of the disk cartridge 1 is 44.2 mm and a width W₄ is 6 mm, for example.

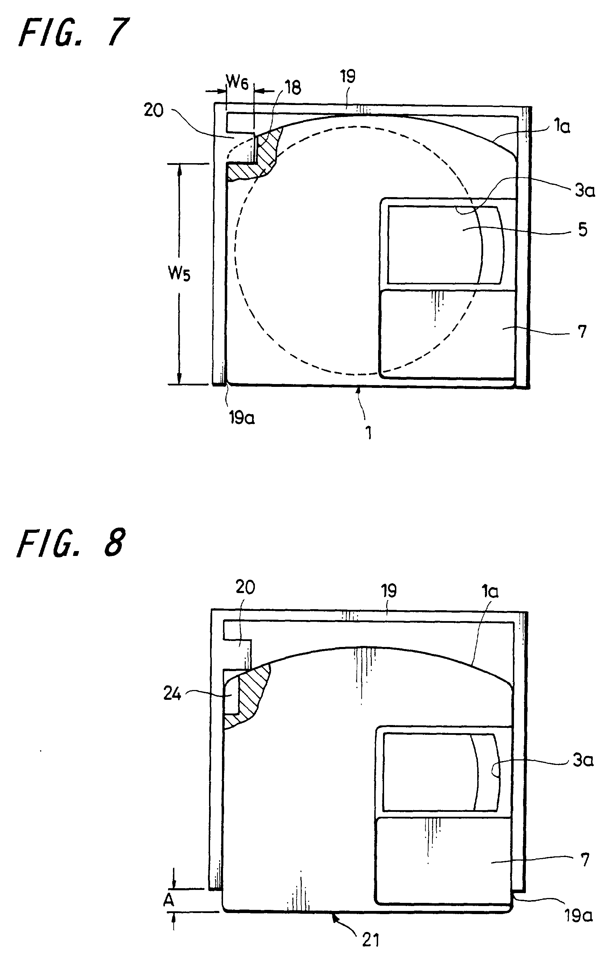

FIG. 7 shows the setting state in which the above first disk cartridge 1 is loaded on a holder of a drive apparatus 19 exclusively-used by light of red laser beams(hereinafter referred to as a "first drive apparatus 19"). The first drive apparatus 19 has formed therein a discriminating convex portion 20 whose shape is identical to that of the discriminating groove 18 of the first disk cartridge 1 so that the discriminating groove can be engaged with the discriminating convex portion. This discriminating convex portion 20 is standardized in such a manner that a depth distance W₅ from an insertion slot 19a of the first drive apparatus 19 is 44.2 mm and a protruded length W₆ is 6 mm, for example.

Reference numeral 21 generally denotes a second disk cartridge. A disk 22 stored within the second disk cartridge 21 is an optical disk having a diameter of 50 mm, for example, of a system that can be recorded/read by light of blue laser beams (390 to 440 nm). The disk 22 in this case has a recording capacity of 2 gigabytes. A cartridge housing of the second disk cartridge 21 has the same shape, the same size and the same arrangement as those of the cartridge housing of the first disk cartridge 1. Therefore, identical parts are marked with identical reference numerals and need not be described.

The second disk cartridge 21 differs from the first disk cartridge 1 in that the second disk cartridge 21 has at its corner portion of the other side surface of the insertion side formed a discriminating groove 24 serving as a mis-insertion discriminating means for discriminating the second disk cartridge 21 from other disk cartridges when the second disk cartridge 21 is loaded on a holder of a drive apparatus 23 exclusively-used by light of blue laser beams (hereinafter referred to as a "second drive apparatus 23").

This discriminating groove 24 has a relatively narrow width and a relatively large depth in the case of the second disk cartridge 21. For example, the discriminating groove 24 is standardized in such a manner that a length W₇ from its bottom end portion to the rear end portion of the disk cartridge 21 is 39.7 mm and its width W₈ is 3 mm as shown in FIG. 6.

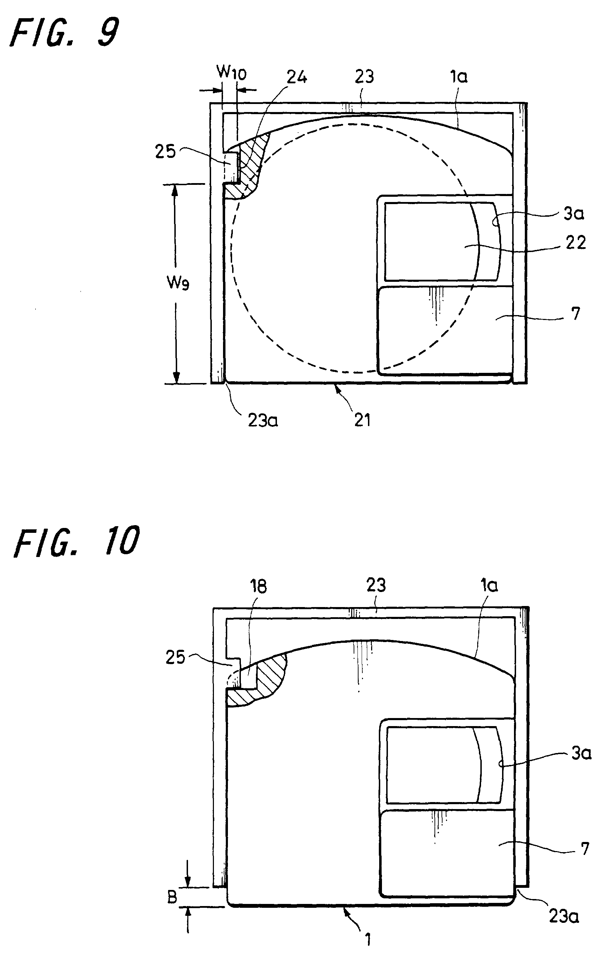

FIG. 9 shows the setting state in which the above second disk cartridge 21 is loaded on the second drive apparatus 23. The second drive apparatus 23 has formed therein a discriminating convex portion 25 having a shape identical to that of the discriminating groove 24 of the second disk cartridge 21 so that the discriminating convex portion can be engaged with the discriminating groove of the second disk cartridge. This discriminating convex portion 25 is standardized in such a manner that a depth distance W₉ from an insertion slot 23a of the second drive apparatus 23, for example, is 39.7 mm and its protruded length W10 is 3 mm.

Next, the manners in which disk cartridges are loaded on drive apparatus will be described with reference to FIGS. 7 to 10.

### [INSERTION OF EXCLUSIVE FIRST DISK CARTRIDGE 1 TO FIRST DRIVE APPARATUS 19]

When the exclusive first disk cartridge 1 is inserted into the first drive apparatus 19, the shutter plate 7 is released by a shutter lock releasing member, not shown. Simultaneously, loading pins are engaged with the loading concave portions 9a, 9b of the first disk cartridge 1, whereby the first disk cartridge 1 is pulled into the drive apparatus 19. The first disk cartridge 1 is brought to the position at which the discriminating groove 18 becomes identical to and is thereby engaged with the discriminating convex portion 20 of the first drive apparatus 19 as shown in FIG. 7. Thereafter, the first disk cartridge 1 is loaded at the loading position. As a result, the first disk cartridge 1 is properly pulled into the first drive apparatus 19 and loaded at the loading position so that a user can recognize that the first disk cartridge 1 has been loaded on the exclusive first drive apparatus 19.

In the case of the system in which the first disk cartridge 1 is inserted into the first drive apparatus 19 manually, the discriminating groove 18 of the first disk cartridge 1 becomes identical to and is thereby engaged with the discriminating convex portion 20 of the first drive apparatus 19, whereby the first disk cartridge 1 is properly stored within the first drive apparatus 19. As a result, a user can recognize that the first disk cartridge 1 is loaded on the exclusive first drive apparatus 19.

### [INSERTION OF SECOND DISK CARTRIDGE 21 OF DIFFERENT TYPE INTO FIRST DRIVE APPARATUS 19]

When the second disk cartridge 21 of different type is inserted into the first drive apparatus 19, the shutter plate 7 is released by the shutter lock releasing member, not shown. Simultaneously, the loading pins are engaged with the loading concave portions 9a, 9b of the second disk cartridge 21, whereby the second disk cartridge 21 is pulled into the drive apparatus 19. However, as shown in FIG. 8, the shape of the discriminating groove 24 of the second disk cartridge 21 is not identical to that of the discriminating convex portion 20 of the first drive apparatus 19. As a consequence, the end face of the insertion side of the second disk cartridge 21 abuts against the discriminating convex portion 20. Thereafter, it is detected that the second disk cartridge 21 is located at the non-loading position, and the second disk cartridge 21 is ejected to the eject position. Thus, a user can recognize that the second disk cartridge 21 is the disk cartridge of different type which cannot be loaded on the first drive apparatus 19.

In the case of the system in which the second disk cartridge 21 is inserted into the first drive apparatus 19 manually, the shape of the discriminating groove 24 of the second disk cartridge 21 is not identical to that of the discriminating convex portion 20 of the first drive apparatus 19, whereby the second disk cartridge 21 is protruded from the insertion slot 19a of the first drive apparatus 19 by a protruded amount A (4.4 mm) and cannot be loaded at the loading position. As a result, a user can recognize that the second disk cartridge 21 is the disk cartridge of different type which cannot be loaded on the first drive apparatus 19.

### [INSERTION OF EXCLUSIVE SECOND DISK CARTRIDGE 21 INTO SECOND DRIVE APPARATUS 23]

When the exclusive second disk cartridge 21 is inserted into the second drive apparatus 23, the shutter plate 7 is released by the shutter lock releasing member, not shown. At the same time, the loading pins are engaged with the loading concave portions 9a, 9b of the second disk cartridge 21, whereby the second disk cartridge 21 is pulled into the drive apparatus 23. The second disk cartridge 21 is brought to the position at which the discriminating groove 24 becomes identical to and is thereby engaged with the discriminating convex portion 25 of the second drive apparatus 23 as shown in FIG. 9. Thereafter, the second disk cartridge 21 is loaded onto the loading position. As a result, the second disk cartridge 21 is properly brought into the second drive apparatus 23 and thereby loaded at the loading position. Therefore, a user can recognize that the second disk cartridge 21 is loaded on the exclusive second drive apparatus 23.

In the case of the system in which the second disk cartridge 21 is inserted into the second drive apparatus 23 manually, when the second disk cartridge is inserted into the position at which the discriminating groove 24 of the second disk cartridge 21 becomes identical to and is thereby engaged with the discriminating convex portion 25 of the second drive apparatus 23, the second disk cartridge 21 is properly stored within the second drive apparatus 23. As a result, a user can recognize that the second disk cartridge 21 is properly loaded on the exclusive second drive apparatus 23 and the second disk cartridge 21 is loaded on the exclusive second drive apparatus 23.

### [INSERTION OF FIRST DISK CARTRIDGE 1 OF DIFFERENT TYPE TO SECOND DRIVE APPARATUS 23]

When the first disk cartridge 1 of different type is inserted into the second drive apparatus 23, the shutter plate 7 is released by the shutter lock releasing member, not shown. Simultaneously, although the loading pins are engaged with the loading concave portions 9a, 9b of the first disk cartridge 1 so that the first disk cartridge 1 is pulled into the drive apparatus 19, as shown in FIG. 10, the discriminating groove 18 of the first disk cartridge 1 abuts against the discriminating convex portion 25 of the second drive apparatus 23. Thereafter, it is detected that the disk cartridge 1 is located at the non-loading position and the first disk cartridge 1 is ejected to the eject position. As a consequence, a user can recognize that the first disk cartridge 1 is the disk cartridge of the different type that cannot be loaded onto the second drive apparatus 23.

In the case of the system in which the first disk cartridge 1 is inserted into the second drive apparatus 23 manually, the discriminating groove 18 of the first disk cartridge 1 is not identical to the discriminating convex portion 25 of the second drive apparatus 23 so that the first disk cartridge 1 is protruded from the insertion slot 23a of the second drive apparatus 23 by a protruded amount B (3.8 mm) and cannot be loaded at the loading position. As a result, a user can recognize that the first disk cartridge 1 is the disk cartridge of the different type that cannot be loaded on the second drive apparatus 23.

While the amount in which the disk cartridge is protruded from the insertion slot when the disk cartridge of the different type is manually inserted into the drive apparatus is approximately 4 mm which can easily be recognized by a user as described above, the present invention is not limited thereto, and the above protruded amount can freely be changed by varying the distances between the discriminating convex portion 20 of the first drive apparatus 19 and the discriminating convex portion 25 of the second drive apparatus 23 and the insertion end portions of the respective drive apparatus.

The present invention is not limited to the above embodiment also illustrated with reference to the sheets of drawings and can variously be modified without departing from the gist of the present invention.

While the discriminating groove is formed at the corner portion of the disk cartridge side and the discriminating convex portion is formed on the drive apparatus side as the mis-insertion discriminating means as described above, the shapes of these discriminating groove and the discriminating convex portion and the attachment positions thereof are not limited to the above shapes and positions.

While the first disk cartridge 1 has stored therein the disk 5 of the system that can be recorded/read by light of red laser beams and the second disk cartridge 21 has stored therein the disk 22 of the system that can be recorded/read by light of blue laser beams as described above, the present invention is not limited thereto, and can be widely applied to disk cartridge apparatus of other systems than the systems in which the disk is recorded/read by light of red laser beams and light of blue laser beams and the cartridge housings of which are the same in shape.

As described above, since the disk cartridge apparatus according to the present invention includes the mis-insertion discriminating means whose concave and convex surface shapes become identical to allow the disk cartridges of the different types to be loaded on respective exclusive recording and reproducing apparatus when the disk cartridges of the different types having cartridge housings of the same shape to store therein the disks of different information record and read systems are inserted into the respective exclusive recording and reproducing apparatus and whose concave and convex surface shapes become nonidentical to inhibit the disk cartridge from being loaded on the different recording and reproducing apparatus when the disk cartridge is inserted into the different recording and reproducing apparatus, when the disk cartridge of the different system is inserted into the recording and reproducing apparatus, the disk cartridge is automatically ejected from the recording and reproducing apparatus or the disk cartridge is projected from the recording and reproducing apparatus so that a user can easily and instantly recognize that the disk cartridge is the disk cartridge of the different system.

Since the mis-insertion discriminating means includes the discriminating grooves having different groove widths and lengths provided on one side surface of the insertion side of the disk cartridge of the different type and the discriminating convex portions with which the discriminating grooves of the disk cartridge are engaged provided on the recording and reproducing apparatus side, the disk cartridge can reliably be identified by a simple arrangement from a mechanism standpoint.

Since the cartridge according to the present invention is comprised of the disk cartridges of the different types having the cartridge housings of the same shape to store therein the disks of the different information recording and reading systems and the disk is comprised of the disk of the system that can be recorded/read by light of red laser beams and the disk of the system that can be recorded/read by light of blue laser beams, the disk cartridge according to the present invention can be selectively applied to various information devices as the disk cartridges of different information recording amounts.

Having described preferred embodiments of the present invention with references to the accompanying drawings, it is to be understood that the present invention is not limited to the above-mentioned embodiments and that various changes and modifications can be effected therein by one skilled in the art without departing from the spirit or scope of the present invention as defined in the appended claims.

## Claims

1. A disk cartridge system comprising:
disk cartridges of different kinds having cartridge housings of the same shape to store therein disks of different information recording and reading systems, said cartridge housings having shutters to open and close window portions through which said disks can be accessed from the outside;
respective exclusive recording and/or reproducing apparatus on which said disk cartridges of different kinds are to be loaded; and
said disk cartridges and said recording and/or reproducing apparatus having mis-insertion discriminating means having concave and convex surface shapes which are made identical to each other for a disk cartridge of a given kind and the respective exclusive recording and/or reproducing apparatus to enable said disk cartridges of different kinds to be loaded on said respective exclusive recording and reproducing apparatus when said disk cartridges of different kinds are inserted into said respective exclusive recording and reproducing apparatus, said concave and convex surface shapes being made nonidentical for disk cartridges of different kinds to inhibit said disk cartridges from being loaded on other than the respective exclusive recording and/or reproducing apparatus recording and reproducing apparatus when said disk cartridges are inserted into said different recording and reproducing apparatus.

2. A disk cartridge apparatus according to claim 1, wherein said mis-insertion discriminating means comprise discriminating grooves of different widths, different depths and different lengths provided on one side surface of the insertion side of said disk cartridges of different kinds and discriminating convex portions provided on said recording and reproducing apparatus so as to be respectively engaged with said discriminating grooves.

3. A plurality of disk cartridges of different kinds having cartridge housings of the same shape to store therein disks of different information recording and reading systems, said cartridge housings having shutters to open and close window portions from which said disks can be accessed from the outside and said disks comprising a disk of a system that can be recorded/read by light of red laser beams and a disk of a system that can be recorded/read by light of blue laser beams.
